# EUROPÄISCHE PATENTSCHRIFT

(11) **EP 0 653 560 B1**
(45) Veröffentlichungstag und Bekanntmachung des Hinweises auf die Patenterteilung: **03.06.1998**
(21) Anmeldenummer: 94116036.8
(22) Anmeldetag: 12.10.1994
(51) Int. Cl.: F02M 35/10, F02B 75/22

(54) **Ansaugvorrichtung für eine W-12 Hubkolben-Brennkraftmaschine**
Intake device for a W-12 internal combustion engine
Dispositif d'aspiration pour un moteur à combustion interne du type W 12

(30) Priorität: 16.10.1993 DE 4335358
(43) Veröffentlichungstag der Anmeldung: 17.05.1995
(73) Patentinhaber: AUDI AG, 85045 Ingolstadt (DE)
(72) Erfinder: Pölzl, Hans-Werner, Dipl.-Ing., D-74206 Bad Wimpfen (DE); Stemmer, Xaver, Dipl.-Ing., D-85084 Reichertshofen (DE); Bandel, Clemens, Dipl.-Ing., D-85049 Ingolstadt (DE)

(56) Entgegenhaltungen:
- DE-C- 499 549
- GB-A- 746 399
- PATENT ABSTRACTS OF JAPAN vol. 15, no. 354 (M-1155) 6. September 1991 & JP-A-03 138 421 (MAZDA MOTOR CORP) 12. Juni 1991
- PATENT ABSTRACTS OF JAPAN vol. 15, no. 329 (M-1149) 21. August 1991 & JP-A-03 124 915 (MAZDA MOTOR CORP) 28. Mai 1991

## Beschreibung

Die Erfindung betrifft eine Ansaugvorrichtung für eine W-12 Hubkolben-Brennkraftmaschine mit drei Zylinderreihen zu je vier Zylindern gemäß dem Oberbegriff des Patentanspruches 1.

Eine derartige Brennkraftmaschine ist der JP-A-3 138 421 entnehmbar, bei der gemäß Fig. 4 der Zeichnung zwei zwischen den Zylinderreihen liegende Ansaugverteiler vorgesehen sind, von denen ein jeder über separate Leitungen mit den vier Zylindern der jeweils äußeren Zylinderreihe und mit jeweils zwei Zylindern der mittleren Zylinderreihe verbunden ist. Diese strömungstechnisch an sich günstige Anordnung bewirkt aber eine Zylinderkopfkonstruktion der mittleren Zylinderreihe, die von den äußeren Zylinderreihen wesentlich abweist. Ferner wäre eine Zylinderabschaltung z. B. von sechs Zylindern im Teillastbereich zur Einsparung von Kraftstoff steuerungstechnisch nur kompliziert durchführbar.

Aufgabe der Erfindung ist es, ausgehend von der gattungsgemäßen Brennkraftmaschine eine Ansaugvorrichtung vorzuschlagen, die bei vertretbarem baulichen und steuerungstechnischen Aufwand ein günstiges Betriebsverhalten ergibt.

Diese Aufgabe wird erfindungsgemäß mit den kennzeichnenden Merkmalen des Patentanspruches 1 gelöst. Vorteilhafte Weiterbildungen der Erfindung sind den weiteren Patentansprüchen entnehmbar.

Erfindungsgemäß wird vorgeschlagen, die Brennkraftmaschine steuerungstechnisch wie zwei Sechszylinder-Brennkraftmaschinen mittels zweier Ansaugverteiler zu betreiben, wobei die Ansaugverteiler jeweils mit zwei Zylindern einer jeden Zylinderreihe der Brennkraftmaschine verbunden sind. Daraus resultiert ein verminderter steuerungstechnischer und baulicher Aufwand in der ansaugseitigen Versorgung der Brennkraftmaschine, indem unter anderem die Brennstoffzumessung und auch die zur Abgasentgiftung erforderliche Lambdaregelung entsprechend zwei Sechszylinder-Brennkraftmaschinen ausgelegt werden kann. Darüberhinaus bietet diese Anordnung den Vorteil, sechs Zylinder der Brennkraftmaschine beispielsweise im Stadtbetrieb stillzulegen und bei gleichmäßiger Durchwärmung der Brennkraftmaschine lediglich sechs Zylinder zu befeuern.

Baulich besonders vorteilhaft können dabei die beiden Ansaugverteiler bei einer stehenden Anordnung der mittleren Zylinderreihe der Brennkraftmaschine über den äußeren Zylinderreihen angeordnet sein, so daß sich insbesondere bei der Anordnung der Brennkraftmaschine in einem Kraftfahrzeug eine flach bauende Konstruktion ergibt.

Durch die Merkmale der Patentansprüche 3 - 6 ergeben sich günstige Leitungsführungen insbesondere bei der Verwendung von Einzelleitungen von den Ansaugverteilern zu den Einlaßkanälen in den Zylinderköpfen der entsprechenden Zylinderreihen, wobei die Einzelleitungen im wesentlichen gleich lang ausgeführt werden können. Selbstverständlich können die Einzelleitungen hinsichtlich ihrer baulichen Ausführung zu Leitungsabschnitten zusammengefaßt sein.

Zur strömungsdynamisch günstigen Abstimmung der Ansaugvorrichtung wird ferner gemäß Anspruch 7 vorgeschlagen, bei der vorgebenen Zündfolge die angegebenen Zylinder hinsichtlich des Ansaugsystems wie angegeben zusammenzufassen, um somit sich nachteilig beeinflussende Gasschwingungen im Ansaugsystem auszuschließen.

Die Merkmale des Patentanspruches 8 schließlich beschreiben eine vorteilhafte bauliche Gestaltung der Ansaugvorrichtung, die trotz komplizierter Leitungsführung eine einfach herstellbare, montagefreundliche Konstruktion ermöglicht.

Ein Ausführungsbeispiel der Erfindung ist im folgenden mit weiteren Einzelheiten näher erläutert. Die anliegende Zeichnung zeigt in
- Fig. 1: ein Blockschaltbild einer Ansaugvorrichtung für eine W-12 Hubkolben-Brennkraftmaschine mit zwei Ansaugverteilern; und
- Fig. 2: einen Querschnitt durch eine teilweise dargestellte W-12 Hubkolben-Brennkraftmaschine mit oberhalb den Zylinderreihen liegender Ansaugvorrichtung gemäß Fig. 1.

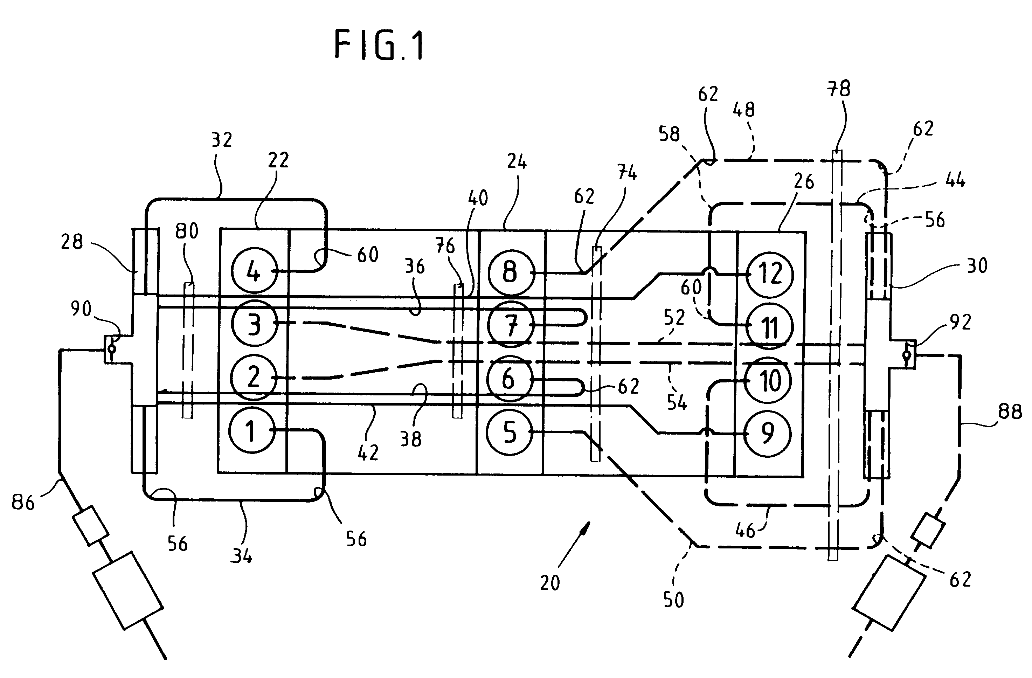

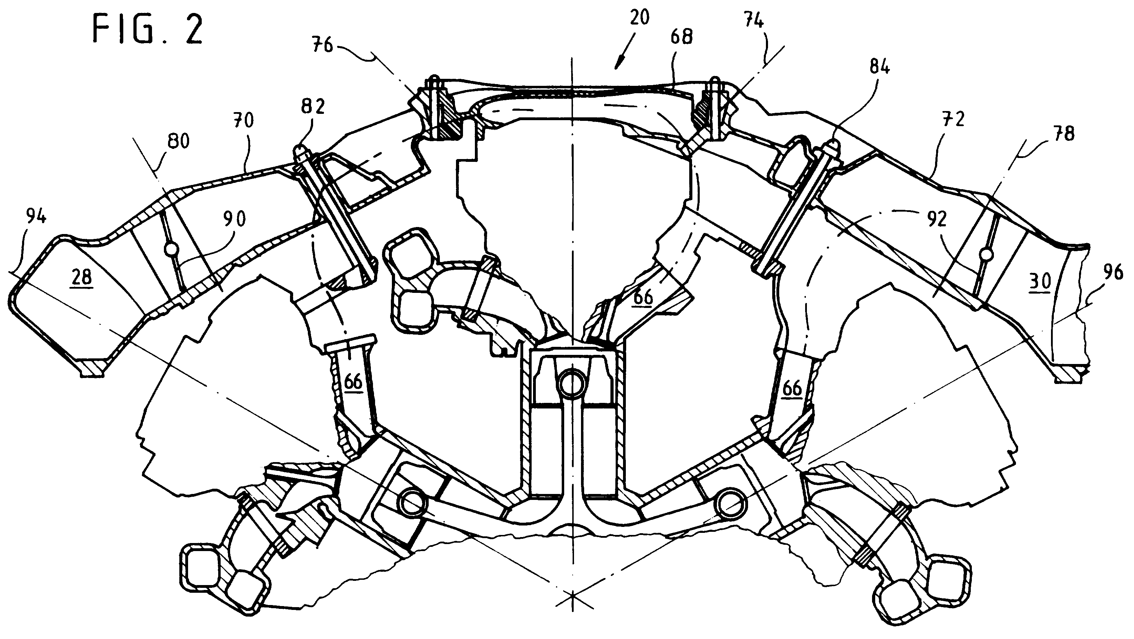

In den Fig. 1 und 2 ist mit 20 eine W-12 Viertakt-Hubkolbenbrennkraftmaschine dargestellt deren drei parallel zueinander liegende Zylinderreihen 22,24,26 je vier Zylinder (numeriert von 1 - 12) aufweisen. Die Zylinderreihen sind - wie der Fig. 2 ohne weiteres entnehmbar ist - W-förmig angeordnet, wobei die mittlere Zylinderreihe mit den Zylindern 5 - 8 stehend ausgerichtet ist. Der Zylinderversatz beträgt 60° zueinander, die Zündfolge ist 1-8-9-3-6-11-4-5-12-2-7-10.

Die Ansaugvorrichtung der Brennkraftmaschine setzt sich aus zwei parallel zu den äußeren Zylinderreihen 22,26 angeordneten Ansaugverteilern 28,30 zusammen, die über noch zu beschreibende Einzelleitungen mit den jeweiligen Einlaßkanälen in den Zylinderköpfen der Brennkraftmaschine verbunden sind.

So ist der auf der Zeichnung links befindliche Ansaugverteiler 28 über zwei Einzelleitungen 32,34 mit den Zylindern 1 und 4 der linken äußeren Zylinderreihe strömungsverbunden. Zwei weitere Leitungen 36,38 verbinden die Zylinder 6 und 7 der zweiten Zylinderreihe 24 und zwei Leitungen 40,42 die Zylinder 9 und 12 der dritten Zylinderreihe 26 mit dem Ansaugverteiler 28. Wie aufgrund der schematisch gezeichenten Leitungsführung ersichtlich ist, sind die Einlaßseiten bzw. die Einlaßkanäle im Zylinderkopf der Brennkraftmaschine der beiden äußeren Zylinderreihen 22,26 dem jeweils gegenüberliegenden Ansaugverteiler 28,30 bzw. der mittleren Zylinderreihe 24 zugewandt angeordnet.

Der rechtsseitige Ansaugverteiler 30 ist über zwei Einzelleitungen 44,46 mit den Zylindern 10,11 der rechten Zylinderreihe 26 verbunden; desweiteren sind die Einzelleitungen 48,50 und die Einzelleitungen 52,54 an die Zylinder 5 und 8 der mittleren Zylinderreihe 24 bzw. die Zylinder 2 und 3 der linken Zylinderreihe 22 angeschlossen.

Zur Erzielung im wesentlichen gleicher Leitungslängen sind jeweils die Einzelleitungen 32,34 bzw. 44,46 mit drei Strömungsumlenkungen 56,58,60 versehen, während die mittellangen Leitungen 36,38 bzw. 48,50 mit zumindest einer Strömungsumlenkung 62 und die aufgrund der am weitesten entfernt liegenden Zylinderreihen längsten Leitungen 40,42 bzw. 52,54 im wesentlichen ohne Strömungsumlenkung geradlinig verlegt sind. Unter Umlenkungen im Sinne der vorliegenden Erfindung sind entsprechende absichtlich angeordnete Rohrkrümmungen zu verstehen, aufgrund deren die gedachte Rohrmittelachse entsprechend verlängerbar ist.

Zur Erzielung der gewünschten Umlenkungen gehen die kurzen Leitungen 32,34 bzw. 44,46 von der Stirnseite der rohrförmigen Ansaugverteiler 28,30 ab, sind seitlich an den Zylinderköpfen der Zylinderreihen 22,26 vorbeigeführt und münden schließlich in die entsprechenden Einlaßkanäle der Brennkraftmaschine (vgl. Fig. 2 Einlaßkanäle 66).

Wie insbesondere die Fig. 2 zeigt, sind die strömungstechnisch als Einzelleitungen zu bezeichnenden Leitungen 36,38,40,42,44,46,48,50, 52,54 zu die Einzelleitungen als Kanäle beinhaltenden Leitungsabschnitten 68,70,72 zusammengefaßt, die sich über die mittlere Zylinderreihe 24 an diese mit flachem Querschnitt angeschmiegt erstrecken und die über Befestigungsflansche 74,76,78,80 miteinander und mit den Ansaugverteilern 28,30 durch entsprechende Befestigungsschrauben verbunden sind. Die Ansaugverteiler 28,30 liegen dabei über den Zylinderköpfen der äußeren Zylinderreifen 22,26 im wesentlichen in deren Zylindermittelebenen 94,96. Die gesamte Baueinheit ist nach deren Vormontage über die Befestigungsschrauben 82,84 an maschinenfesten Wänden der Brennkraftmaschine angeschraubt.

Die Ansaugverteiler sind in bekannter Weise mit Leitungen 86,88 verbunden, in denen die Brennstoffzumessung der Brennkraftmaschine und eine Luftfilterung angeordnet sind. Der Durchsatz an Verbrennungsluft kann in bekannter Weise über Drosselklappen 90,92 gesteuert sein.

## Patentansprüche

1. Ansaugvorrichtung für eine W-12 Hubkolbenbrennkraftmaschine mit drei Zylinderreihen zu je vier Zylindern, die über zwei Ansaugverteiler mit zu jeder Zylinderreihe führenden, separaten Leitungen mit Verbrennungsluft versorgt ist, dadurch gekennzeichnet, daß jeder Ansaugverteiler (28,30) mit je zwei Zylindern einer jeden Zylinderreihe (22,24,26) verbunden ist.

2. Ansaugvorrichtung nach Anspruch 1, dadurch gekennzeichnet, daß die Ansaugverteiler (28,30) im wesentlichen über den äußeren Zylinderreihen (22,26) in deren jeweiliger Zylindermittenebene angeordnet sind.

3. Ansaugvorrichtung nach den Ansprüchen 1 und 2, dadurch gekennzeichnet, daß die Einlaßkanalseite der Zylinderköpfe der beiden äußeren Zylinderreihen (22,26) innenliegend und einander zugewandt sind und daß zwei Zylinder (1,4 bzw. 9,12) mit dem jeweils gegenüber liegenden Ansaugverteiler (28,30) verbunden sind.

4. Ansaugvorrichtung nach den Ansprüchen 1 - 3, dadurch gekennzeichnet, daß die am weitesten von dem jeweiligen Ansaugverteiler (28,30) weg liegenden Zylinder (2,3 bzw. 9,12) der äußeren Zylinderreihen (22,26) durch im wesentlichen geradlinige, flach über die mittlere Zylinderreihe (24) verlaufende Leitungen (40,42 bzw. 52,54) mit den Ansaugverteilern (28,30) verbunden sind.

5. Ansaugvorrichtung nach den Ansprüchen 1 - 4, dadurch gekennzeichnet, daß die Einlaßkanäle der mittleren Zylinderreihe (24) auf einer einheitlichen Seite liegen und daß die mit den beiden Ansaugverteilern (28,30) verbundenen Leitungen (36,38 bzw. 48,50) zum näher liegenden Ansaugverteiler (30) zumindest zwei Umlenkungen (62) und zum weiter entfernt liegenden Ansaugverteiler (28) nur eine Umlenkung (62) aufweisen.

6. Ansaugvorrichtung nach den Ansprüchen 1 - 5, dadurch gekennzeichnet, daß die dem jeweiligen Ansaugverteiler (28,30) am nächsten liegenden Zylinder der äußeren Zylinderreihen (22,26) mit stirnseitig um die Zylinderköpfe herum geführten Leitungen (32,34 bzw. 44,46) seitlich an die Ansaugverteiler (28,30) angeschlossen sind, wobei die Ansaugverteiler (28,30) mit mittig einmündenden Luftzuführungen (86,88) versehen sind.

7. Ansaugvorrichtung nach den Ansprüchen 1 - 6, dadurch gekennzeichnet, daß bei einer Zündfolge von 1-8-9-3-6-11-4-5-12-2-7-10 die Zylinder 1-4, 6-7, und 9-12 mit dem einen Ansaugverteiler (28) und die übrigen Zylinder mit dem anderen Ansaugverteiler (30) verbunden sind.

8. Ansaugvorrichtung nach den Ansprüchen 1 - 7, dadurch gekennzeichnet, daß die Ansaugverteiler (28,30) mit Einzelleitungen zu einer Baueinheit zusammengefaßt sind, die zumindest einen mittleren, über der mittleren Zylinderreihe (24) liegenden Leitungsabschnitt (68) und zwei äußere, an die Ansaugverteiler (28,30) angeschlossene Leitungsabschnitte (70,72) besitzt.

## Claims

1. Intake device for a W-12 reciprocating-type internal combustion engine having three cylinder banks each comprising four cylinders, which is supplied with combustion air via two intake distributors having separate lines leading to each cylinder bank, characterised in that each intake distributor (28, 30) is connected to two respective cylinders of any cylinder bank (22, 24, 26).

2. Intake device according to claim 1, characterised in that the intake distributors (28, 30) are disposed substantially over the outer cylinder banks (22, 26) in the respective median cylinder plane thereof.

3. Intake device according to claims 1 and 2, characterised in that the intake port side of the cylinder heads of the two outer cylinder banks (22, 26) are situated internally and facing one another and that two cylinders (1, 4 and 9, 12, respectively) are connected to the respective intake distributor (28, 30) situated opposite.

4. Intake device according to claims 1 to 3, characterised in that the cylinders (2, 3 and 9, 12, respectively) of the outer cylinder banks (22, 26) that are situated furthest from the respective intake distributor (28, 30) are connected to the intake distributors (28, 30) by substantially rectilinear lines (40, 42 and 52, 54, respectively) which extend low over the middle cylinder bank (24).

5. Intake device according to claims 1 to 4, characterised in that the intake ports of the middle cylinder bank (24) are situated on the same side and that the lines (36, 38 and 48, 50, respectively) connected to the two intake distributors (28, 30) incorporate at least two direction changes (62) to the nearer intake distributor (30) and only one direction change (62) to the more remote intake distributor (28).

6. Intake device according to claims 1 to 5, characterised in that the cylinders of the outer cylinder banks (22, 26) that are nearest to the respective intake distributor (28, 30) are linked at the side to the intake distributors (28, 30) by lines (32, 34 and 44, 46, respectively) passing around the front of the cylinder heads, the intake distributors (28, 30) being provided with air inlets (86, 88) which discharge at the centre.

7. Intake device according to claims 1 to 6, characterised in that given a firing order of 1-8-9-3-6-11-4-5-12-2-7-10, cylinders 1-4, 6-7, and 9-12 are connected to one intake distributor (28) and the remainder of the cylinders to the other intake distributor (30).

8. Intake device according to claims 1 to 7, characterised in that the intake distributors (28, 30) are combined with single lines to form one constructional unit which has at least one central line section (68) situated over the middle cylinder bank (24) and two outer line sections (70, 72) linked to the intake distributors (28, 30).

## Revendications

1. Dispositif d'admission pour un moteur à combustion interne à pistons en W-12 comportant trois rangées de cylindres de quatre cylindres chacune, qui est alimenté en air de combustion par l'intermédiaire de deux distributeurs d'admission comportant des conduites séparées, conduisant à chaque rangée de cylindres, caractérisé en ce que chaque distributeur d'admission (28, 30) est relié à deux cylindres respectifs de chaque rangée de cylindres (22, 24, 26).

2. Dispositif d'admission selon la revendication 1, caractérisé en ce que les distributeurs d'admission (28, 30) sont disposés sensiblement au-dessus des rangées extérieures de cylindres (22, 26), dans les plans médians respectifs de leurs cylindres.

3. Dispositif d'admission selon les revendications 1 et 2, caractérisé en ce que les faces, pourvues des conduits d'admission, des culasses des deux rangées extérieures de cylindres (22, 26) sont situées vers l'intérieur et sont tournées l'une vers l'autre, et en ce que deux cylindres (1, 4 ou 9, 12) sont reliés au distributeur d'admission respectif (28, 30) placé en face d'eux.

4. Dispositif d'admission selon les revendications 1 à 3, caractérisé en ce que les cylindres (2, 3 ou 9, 12) des rangées extérieures de cylindres (22, 26), qui sont situés le plus loin du distributeur d'admission respectif (28, 30), sont reliés aux distributeurs d'admission (28, 30) par des conduites (40, 42 ou 52, 54) sensiblement rectilignes, qui s'étendent horizontalement au-dessus de la rangée centrale de cylindres (24).

5. Dispositif d'admission selon les revendications 1 à 4, caractérisé en ce que les conduits d'admission de la rangée centrale de cylindres (24) sont situés sur un côté unique et en ce que les conduites (36, 38 ou 48,50), reliées aux deux distributeurs d'admission (28, 30), présentent, par rapport au distributeur d'admission (30) situé le plus près, au moins deux coudes (62) et, par rapport au distributeur d'admission (28) situé le plus loin, un coude (62) seulement.

6. Dispositif d'admission selon les revendications 1 à 5, caractérisé en ce que les cylindres des rangées extérieures de cylindres (22, 26), qui sont situés le plus près du distributeur d'admission respectif (28, 30), sont raccordés latéralement aux distributeurs d'admission (28, 30) à l'aide de conduites (32, 34 ou 44, 46) qui sont dirigées de façon à passer autour des faces d'extrémité des culasses, les distributeurs d'admission (28, 30) étant pourvus d'arrivées d'air (86, 88) débouchant en leur milieu.

7. Dispositif d'admission selon les revendications 1 à 6, caractérisé en ce que, dans le cas de la séquence d'allumage 1-8-9-3-6-11-4-5-12-2-7-10, les cylindres 1-4, 6-7 et 9-12 sont reliés à l'un (28) des distributeurs d'admission et les cylindres restants sont reliés à l'autre distributeur d'admission (30).

8. Dispositif d'admission selon les revendications 1 à 7, caractérisé en ce que les distributeurs d'admission (28, 30) sont réunis à des conduites individuelles en une unité structurelle, qui comporte au moins un tronçon de conduite central (68), situé au-dessus de la rangée centrale de cylindres (24), et deux tronçons de conduite extérieurs (70, 72), raccordés aux distributeurs d'admission (28, 30).
